# EUROPEAN PATENT APPLICATION

(11) **EP 3 178 802 A1**
(43) Date of publication of application: **14.06.2017**
(21) Application number: 16202592.8
(22) Date of filing: 07.12.2016
(51) Int. Cl.: C04B 41/89, F01D 5/28

(54) **ARTICLE FOR HIGH TEMPERATURE SERVICE**

(30) Priority: 09.12.2015 US 201514963878
(71) Applicant: General Electric Company, Schenectady, NY 12345 (US)
(72) Inventor: LUTHRA, Krishan Lal, Niskayuna, NY 12309 (US)
(74) Representative: Pöpper, Evamaria

(57) **Abstract**

An article (100) comprises a substrate (101) comprising a ceramic matrix composite; a first layer (110) disposed over the substrate (101), the first layer (110) comprising an interconnected first silicide, and a second phase; and a second layer (120) disposed over the first layer (110), the second layer (120) comprising a second silicide in mass transfer communication with the first silicide.

## Description

### BACKGROUND

This disclosure generally relates to materials and articles for service in high-temperature applications such as, for example, turbomachinery. More specifically, this disclosure relates to articles that include ceramic matrix composites and associated protective coatings, and methods for making these articles.

Ceramic matrix composite (CMC) materials offer the potential for higher operating temperatures than do metal alloy materials due to the inherent high-temperature material properties of ceramic materials. In applications such as gas turbine assemblies, this capability may be translated into a reduced cooling requirement which, in turn, may result in higher power, greater efficiency, and/or reduced emissions from the machine. However, CMC materials that include significant amounts of silicon-bearing materials, such as silicon carbide, are susceptible to attack and rapid recession by water vapor at elevated service temperatures. Environmental barrier coatings (EBC) have been developed to inhibit this degradation mechanism.

EBCs applied to silicon-bearing materials, for example, are designed to be relatively stable chemically in high-temperature, water vapor-containing environments. One illustrative conventional EBC system, as described in U.S. Patent No. 6,410,148, comprises a silicon or silica bond layer (also referred to herein as a "bondcoat") applied to a silicon-bearing substrate; an intermediate layer comprising mullite or a mullite-alkaline earth aluminosilicate mixture deposited over the bond layer; and a top layer comprising an alkaline earth aluminosilicate deposited over the intermediate layer. In another example, U.S. Patent No. 6,296,941, the top layer is a yttrium silicate layer rather than an aluminosilicate.

The above coating systems can provide suitable protection for articles in demanding environments, but opportunities for improvement in coating performance exist. For instance, the presence of free silicon in the bond layer may restrict the maximum rated material temperature for a coated component to avoid melting of the silicon and resultant mechanical instability of the bond layer. Improvements in the quality of engineered structural materials, such as silicon - bearing ceramics and ceramic matrix composites, have enhanced the high temperature capability of these materials to the point where the melting point of the silicon in the EBC bond layer has become a limiting factor for the use of such materials in high-temperature structural applications.

Therefore, there remains a need in the art for EBC bond layers with temperature capability that exceeds that of conventional bond layers. There is also a need for machine components employing coating systems that incorporate an improved bond layer to enhance their high-temperature capability.

### BRIEF DESCRIPTION

Embodiments of the present invention are provided to meet this and other needs. One embodiment is an article. The article comprises a substrate comprising a ceramic matrix composite; a first layer disposed over the substrate, the first layer comprising an interconnected first silicide, and a second phase; and a second layer disposed over the first layer, the second layer comprising a second silicide in mass transfer communication with the first silicide.

Another embodiment is an article. the article comprises a substrate comprising a ceramic matrix composite; a first layer disposed over the substrate, the first layer comprising an interconnected first silicide phase, and a second phase, the second phase comprising silicon carbide, wherein a volume fraction of silicide in the first layer is in the range from about 10 percent to about 40 percent; a second layer disposed over the first layer, the second layer comprising a second silicide in mass transfer communication with the first silicide; and a top layer disposed over the second layer, the top layer comprising an oxide.

Another embodiment is an article. The article comprises a substrate comprising a ceramic matrix composite; a first layer disposed over the substrate, the first layer comprising an interconnected first silicide phase, and a second phase, the second phase comprising silicon nitride, wherein a volume fraction of silicide in the first layer is in the range from about 10 percent to about 50 percent; and a second layer disposed over the first layer, the second layer comprising a second silicide in mass transfer communication with the first silicide; and a top layer disposed over the second layer, the top layer comprising an oxide.

Another embodiment is an article. The article comprises a substrate comprising a ceramic matrix composite; a first layer disposed over the substrate, the first layer comprising an interconnected first silicide phase, and a second phase, the second phase comprising a rare earth disilicate, wherein a volume fraction of silicide in the first layer is in the range from about 10 percent to about 40 percent; a second layer disposed over the first layer, the second layer comprising a second silicide in mass transfer communication with the first silicide; and a top layer disposed over the second layer, the top layer comprising an oxide.

### DRAWINGS

These and other features, aspects, and advantages of the present invention will become better understood when the following detailed description is read with reference to the accompanying drawing in which like characters represent like parts, wherein:
Figure 1 is a cross-section illustration of one embodiment of the present invention;
Figure 2 is a cross-section illustration of another embodiment; and
Figure 3 is a cross-section illustration of another embodiment of the present invention.

### DETAILED DESCRIPTION

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

In the following specification and the claims, the singular forms "a", "an" and "the" include plural referents unless the context clearly dictates otherwise. As used herein, the term "or" is not meant to be exclusive and refers to at least one of the referenced components being present and includes instances in which a combination of the referenced components may be present, unless the context clearly dictates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

The techniques described herein address the temperature limitations described above for conventional silicon bondcoats through the use of silicide materials that have substantially higher melting temperatures than elemental silicon, but possess the ability to form a protective silica layer in the presence of an oxidative environment in a similar manner to conventional silicon bondcoats. However, silicides tend to have significantly higher coefficient of thermal expansion than substrate materials of interest, such as silicon carbide, silicon nitride, and CMC's based on one or more of these; this mismatch in thermal expansion coefficient may lead to spallation of silicide coatings due to high thermal stresses. Reducing the thickness of the silicide will reduce the thermal stress to some degree, but such a reduction reduces the amount of material available to protect the substrate, leading to unacceptable service life.

Embodiments of the present invention are designed to deal with the oxidation issue through the application of silicide materials, using a coating architecture that mitigates the thermal expansion mismatch, through the use of a mixture of silicides (comparatively high thermal expansion coefficient) with comparatively low-thermal-expansion-coefficient compounds such as silicon nitride, while maintaining excellent high temperature oxidation resistance.

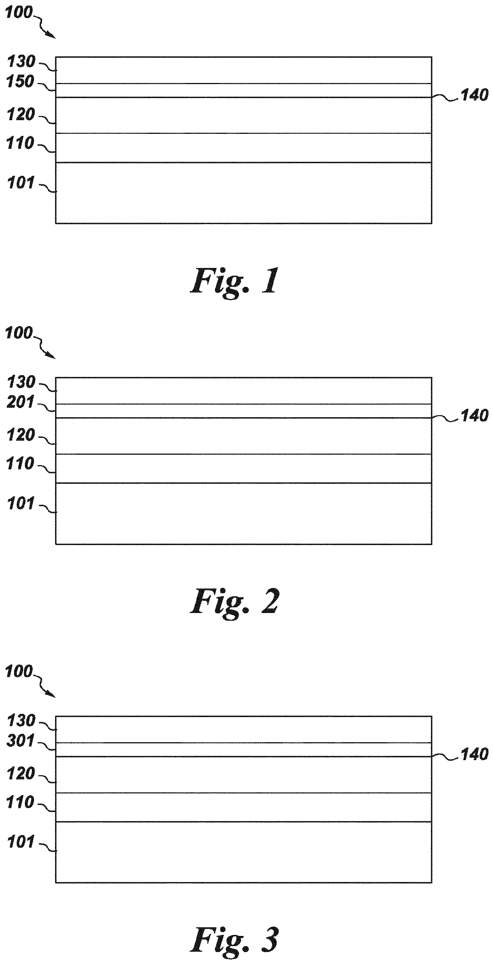

Referring to Figure 1, one embodiment is an article 100 comprising a substrate 101, a first layer 110 disposed over substrate 101, and a second layer 120 disposed over first layer 110. In some embodiments, one or more top layer 130 is disposed over second layer 120. Very generally speaking, and as explained in greater detail below, in service under high-temperature, oxidative conditions, silicon is provided in substantial part from the material constituents of first layer 110, diffuses through second layer 120 to the surface 140 of second layer 120, and there reacts with oxidative species from the environment to form a protective layer of oxide 150. This layer of oxide 150 is typically rich in silica and is often referred to in the art as a "thermally grown oxide" or "TGO."

Substrate 101 may be made from any suitable material, such as a ceramic or an intermetallic material. The substrate, in one embodiment, includes a ceramic, for example an oxide, nitride, or carbide. In a particular embodiment, substrate 101 includes a material that comprises silicon, such as silicon nitride, or silicon carbide. This material, in some embodiments, includes a ceramic-matrix composite (CMC) material, such as a material made of a matrix phase and a reinforcement phase. The matrix phase, the reinforcement phase, or both of these phases includes, in certain embodiments, a silicon-bearing ceramic, such as silicon carbide (SiC) or silicon nitride. In one embodiment, the article 100 is a component for a gas turbine assembly, such as, for example, a combustion liner, transition piece, shroud, vane, or blade.

First layer 110 includes at least two materials: a first silicide, and a second phase. The second phase includes material having a lower coefficient of thermal expansion than the first silicide, and in particular embodiments has a coefficient of thermal expansion less than or equal to that of silicon carbide. Including this low-expansion material as the second phase in first layer 110 reduces the effective thermal expansion coefficient of the layer 110 and mitigates thermal stresses that would otherwise arise through the presence of silicide materials. Examples of such low-expansion materials include ceramic materials, such as those including carbon, e.g., carbides (for example, silicon carbide); those including nitrogen, such as nitrides (for example, silicon nitride); those including oxygen, such as oxides (for example, titanates, and rare-earth silicates, including rare-earth disilicates); and those including more than one of these elements, such as an oxynitride (for example, SiAlON).

First layer 110 also includes a first silicide, as stated above. It should be noted that the use of the term "first silicide" is intended only to delineate silicide material present in first layer 110 from silicide material present in second layer 120. No limitation on the composition of the material is implied. Indeed, in some embodiments, described below, the "first silicide" includes more than one silicide composition (such as silicides of the same metal element but having different silicon content levels), and in some embodiments, a silicide in first layer 110 is nominally identical to a silicide present in second layer 120.

The first silicide, that is, any silicide material present in first layer 110, may serve at least two functions during service. The first silicide may provide a source of silicon for transport to the surface 140 of second layer 120 to participate in the formation of protective TGO 150.

Additionally, and importantly, the first silicide provides a pathway for silicon, liberated from its source materials within first layer 110, to diffuse rapidly from the interior of first layer 110 to second layer 120. For this reason, the first silicide is generally situated within first layer 110 in a morphology that provides silicon from first layer 110 with a substantially continuous transport pathway via solid state diffusion through first silicide to second layer 120. This morphology is referred to herein as an "interconnected first silicide," to distinguish it from arrangements that would not provide a continuous diffusion path for silicon through silicide, such as discrete, unconnected particles of silicide dispersed within a second phase. However, it is not necessary that the "interconnected" first silicide be completely interconnected. For example, multiple networks of first silicide may be present instead of one completely connected network; moreover, for instance, a series of parallel plates of first silicide disposed to span through the cross section of first layer 110 may also provide the required level of mass transport for silicon, depending on plate spacing and other factors. These arrangements, and any others that provide a substantially continuous mass transport pathway through the first layer 110 via first silicide, fall within the scope of the term "interconnected" for the purposes of this description.

The selection of relative amounts of first silicide and second phase results from a consideration of competing factors. Mass transport of silicon from first layer 110 to second layer 120 through the first silicide is more easily facilitated by having higher levels of connectivity among branches of the first silicide network, which tends to favor relatively high levels of silicide content, depending on the morphology of the silicide within the layer. On the other hand, if the amount of first silicide in first layer is too high, the effective thermal expansion coefficient of first layer 110 may exceed levels desirable to mitigate thermal stress. Clearly, the use of a second phase material having comparatively low thermal expansion coefficient, such as silicon nitride, may allow for the use of a higher content of silicide than would the use of a second phase having a higher thermal expansion coefficient. In one embodiment, the first silicide is present in first layer 110 in a range from about 10 volume percent to about 70 volume percent, and in particular embodiments, the range is from about 20 volume percent to about 40 volume percent.

Where the second phase includes silicon carbide, in some embodiments the volume fraction of first silicide is desirably, but not necessarily, maintained in a range from about 10 percent to about 40 percent. Where the second phase includes silicon nitride, which has a lower thermal expansion coefficient than silicon carbide, in some embodiments the volume fraction of first silicide is desirably, but not necessarily, maintained in a range from about 10 percent to about 50 percent. A somewhat higher volume fraction may be possible here compared to the silicon carbide example, due to the lower coefficient of thermal expansion for the silicon nitride. Where the second phase is a rare earth disilicate, in some embodiments the volume fraction of first silicide is desirably, but not necessarily, maintained in a range from about 10 percent to about 40 percent.

In a particular embodiment, the materials and amounts selected for first layer 110 are such that the first layer 110 has an effective coefficient of thermal expansion below about 6 parts per million per degree Celsius; such a value is desirable for maintaining thermal stresses at practical levels on CMC substrates containing silicon carbide, for example. Where the CMC substrate includes substantial amounts of silicon nitride, the effective coefficient of first layer may be designed to be even lower than this, because silicon nitride has a lower thermal expansion coefficient than silicon carbide.

The selection of silicide materials for use in first layer 110 depends in part on a number of factors. For example, the silicide should have a high melting temperature and at most minimal reactivity with the second phase at the high temperatures inherent to service conditions for gas turbine components. The silicide in first layer 110 should also readily transport silicon via solid state diffusion at these high temperatures. Examples of silicides that may be suitable for use in first layer 110 include silicides of molybdenum, tantalum, tungsten, niobium, titanium, and ruthenium, along with silicides that include combinations of one or more of these elements.

Illustrative examples of silicide types that may be included in first layer 110 include disilicide compounds, such as molybdenum disilicide (MoSi₂), lower silicide compounds (that is, silicides such as Mo₅Si₃ that have lower silicon content than disilicides), and combinations of disilicide and lower silicide. As noted previously, the "first silicide" term is used herein to encompass not only embodiments where only one silicide compound is present in first layer 110, but also embodiments in which the first silicide includes a combination of more than one silicide compound. Disilicides, being higher in silicon content level than lower silicides, may provide a ready source for silicon through decomposing to a lower silicide and silicon. Lower silicides, in some cases, may have lower coefficients of thermal expansion than their corresponding disilicides, providing the potential to use thicker layers and/or higher silicide contents in first layer 110 than thermal stress considerations may allow for higher silicides, such as disilicides. In some embodiments, the first silicide includes a disilicide of one or more metal elements, and a lower silicide of the same one or more metal elements; use of the same family of silicides in such a mixture may provide good chemical stability between the two compounds of the first silicide. The term "first silicide" encompasses silicide material present in first layer 110 initially and at any time thereafter, including silicide that forms as a result of chemical changes within first layer 110 that transform one silicide to a different silicide.

Thickness of first layer 110 depends in part upon materials selection for substrate 101, and the first silicide and second phase of first layer 110; the thermal expansion properties of these materials contribute to the thermal stress generated within first layer 110. Generally, the higher the mismatch between the effective thermal expansion coefficient of first layer 110 and substrate 101, the thinner the layer that can be accommodated. In some embodiments, first layer has a thickness in the range from about 25 micrometers to about 500 micrometers. In certain embodiments, this range is from about 25 micrometers to about 250 micrometers, and in particular embodiments it is from about 25 micrometers to about 100 micrometers.

First layer 110, a layer comprising at least two materials, may be fabricated using techniques available in the art. The fabrication method disposes the second phase within an interconnected first silicide to arrive at the structure described above. For instance, where a comparatively high total silicide content, such as 25 volume percent or higher, can be tolerated, layer 110 may be fabricated by plasma spraying, including, for instance, liquid injection plasma spray techniques, with expectations of suitable degree of interconnection of the silicide material to provide adequate mass transport of silicon to second layer 120. Optimizing spray parameters such as particle size distributions for silicide and second phase feedstock may provide connectivity at silicide levels even lower than 25 percent by volume under some conditions. However, as silicide levels decrease, plasma spray techniques may not provide desired levels of silicide connectivity in first layer 110. Moreover, plasma spraying may not provide an effective means for depositing nitrides, as silicon nitride, for instance generally decomposes before it melts.

As an alternative to plasma spray techniques, vapor deposition techniques, combined with masking, may be applied to ensure adequate connectivity for the first silicide. For instance, chemical vapor deposition (CVD), or a physical vapor deposition (PVD) method such as sputtering, may be applied to deposit second phase material, such as silicon carbide or silicon nitride, onto substrate 101. The deposition may be performed through a mask that creates a pattern having regions where second phase material is deposited, with adjacent spaces between regions, such as a grid pattern or a series of parallel lines. These spaces may then be filled with silicide, again using a CVD or PVD process. Depending on the desired thickness and/or volume of material being deposited, a mask may be applied in this step as well, to allow selective deposition of silicide within the spaces. Second layer 120 may then be applied over the finished first layer 110.

Second layer 120 includes a second silicide, and this second silicide is disposed in mass transfer communication with the first silicide (i.e., the silicide material found in first layer 110). "Mass transfer communication" as used herein means that the materials are situated so as to allow solid state diffusion of silicon through the first silicide into the second silicide. Typically, this means the materials are disposed in physical contact with one another, but mass transfer communication may also be maintained through an intervening layer of material provided that intervening layer does not have a substantially lower diffusion rate for silicon than the first silicide and the second silicide. The term "second silicide" is used herein only to delineate silicide material present in second layer 120 from silicide material present in first layer 110. No limitation on the composition of the material is implied. Indeed, in some embodiments, described below, the "second silicide" includes more than one silicide composition, and in some embodiments, a silicide in first layer 110 ("first silicide") is nominally identical to a silicide present in second layer 120 ("second silicide"). Moreover, the term "second silicide" encompasses silicide material present in second layer 120 initially and at any time thereafter, including silicide that forms as a result of chemical changes within second layer 120 that transform one silicide to a different silicide. Second layer 120 includes at least about 80% by volume second silicide, and in particular embodiments at least about 95% by volume second silicide. In certain embodiments, second layer 120 consists essentially of the second silicide, meaning that second layer 120 includes second silicide and no other material that significantly alters the ability of second layer 120 to perform the functions described herein.

Silicide in second layer 120, that is, the second silicide, performs at least two functions. First, it isolates the second phase of first layer 110 from oxidative species diffusing from the service environment, which prevents undue and potentially damaging oxidation of the second phase. It should be noted that previous proposed coatings that purport to use layers including a mixture of a silicide with a second, low-thermal-expansion phase do not describe the use of anything akin to second layer 120 described herein, the absence of which would leave these proposed systems vulnerable to environmental degradation and substantially reduced effectiveness. Second, silicide in second layer 120 provides a pathway for silicon to diffuse to surface 140, whereupon the silicon is available to participate in the formation of the protective silica TGO 150. Also, depending on the specific material used, the second silicide may also serve as a source for silicon to feed the TGO formation reaction; as a non-limiting example, where the second silicide and the first silicide are identical disilicides, the second silicide will convert to a lower silicide and supply silicon to the TGO reaction until all of the disilicide of the second layer 120 is converted to lower silicide. As explained in more detail, below, proper material selection may provide a remarkable ability for second layer 120 to serve as a "membrane" across which silicon diffuses to the surface 140 for TGO formation, without the membrane itself being structurally consumed.

The material(s) selected for the second silicide desirably is chemically stable at temperatures in the relevant use range for article 100, such as temperatures of 1200 degrees Celsius or greater for the case of gas turbine components. Moreover, at such temperatures it is desirable that the second silicide not substantially react with the second phase of first layer 110. In some embodiments, the second silicide includes a metal element, such as molybdenum, tantalum, tungsten, niobium, titanium, ruthenium, or a combination including one or more of the aforementioned elements. Generally, the diffusion rate of silicon through the silicide is desirably higher at service temperatures (such as temperatures higher than 1200 degrees Celsius) than the diffusion rate of the constituent metal element(s) through the silicide at the same temperature, to promote desirable silicon oxidation at surface 140 over potentially less desirable metal oxide formation.

Moreover, the silicide is typically selected such that, again at relevant service temperatures, silicon diffusion through the silicide exceeds the rate at which oxygen diffuses through silica; in some cases this difference may be by a factor of ten or more, and in certain instances it may differ by more than a factor of 100. This comparatively rapid rate of silicon transport through the second silicide enables a remarkable ability to generate the protective TGO 150 without substantially consuming (that is, completely oxidizing) the second silicide, because silicon from first layer 110 is able to move quickly to interface 140 to feed the TGO formation reaction before oxygen penetrates through the TGO to substantially attack second layer 120. First layer 110 thus serves as a "reservoir" of silicon that travels via solid state diffusion through the first silicide in first layer 110 and the second silicide in second layer 120 to arrive at surface 140 and there participate in the formation of TGO 150. Because second layer 120 is not substantially consumed in service, it may be disposed as a relatively thin layer, and so may not generate undesirable levels of thermal stress even where its silicide has a rather substantial mismatch of coefficient of thermal expansion relative to that of substrate 101.

The second silicide may include one silicide constituent, or it may include two or more silicide constituents. In one embodiment, the second silicide includes a disilicide, such as a disilicide of molybdenum, tantalum, tungsten, niobium, titanium, ruthenium, or a combination including one or more of these elements. As noted previously, a disilicide may advantageously provide a source for silicon to be used in formation of the TGO 150, but at the cost of a higher level of thermal expansion coefficient mismatch with substrate 101. In some embodiments, the second silicide includes a silicide having lower silicon content than a disilicide, referred to herein as a "lower silicide," such as a lower silicide that exists in chemical equilibrium with a given disilicide, i.e., the next silicide to the disilicide in a descending order list of stable silicides for a given silicon-metal element equilibrium system. In particular embodiments, the second silicide consists essentially of one or more of such lower silicides. Examples of such lower silicides include, without limitation, TiSi, RuSi, and Z₅Si₃ where Z is, for instance, molybdenum, niobium, tantalum, and/or tungsten. As noted previously, lower silicides tend to have smaller coefficients of thermal expansion than their corresponding disilicides (meaning, disilicides of the same metal element), providing a better thermal expansion match with low-expansion CMC substrates such as CMC's containing silicon carbide or silicon nitride. The use of lower-expansion materials may allow the use of a thicker second layer 120, which may provide a more robust coating that better withstands mechanisms operative at high temperature, such as Oswaldt ripening, that may damage thinner coatings over time. In some embodiments, second layer 120 has a thickness up to about 250 micrometers. Generally, the thickness of the second layer 120 is designed to be little or no thicker than is needed to withstand these operative damage mechanisms for a desired lifetime. Accordingly, in certain embodiments, this thickness is in a range from about 1 micrometer to about 50 micrometers. Where a thinner layer is desired, second layer may be in a range from about 1 micrometer to about 25 micrometers, and in particular embodiments the range is from about 1 micrometer to about 5 micrometers.

In some embodiments, the second silicide includes a lower silicide, which may allow for a thicker second layer 120 to be applied than if a higher-thermal-expansion-coefficient silicide, such as a disilicide, were used. In particular embodiments of this type, the metal element components of first silicide and the second silicide are identical, that is, the first silicide and the second silicide are compounds of the same metal element, which may mitigate thermodynamic instability issues within the layers.

Second layer 120 may be deposited over first layer using any suitable coating technique, such as by plasma spraying, CVD, and/or PVD techniques.

Other coating layers may be present in article 100. As shown in Figure 2, in some embodiments, an additional layer 201, comprising silica, is disposed between second layer 120 and top layer 130. This silica-bearing layer 201 may help to avoid issues with transient oxidation processes that could occur early in the service life of article. For instance, the first oxide to form on the metal silicide of second layer 120 will likely include silica and oxide of the particular metal element(s) present in the silicide. At comparatively low temperatures, such as about 800 C, the growth rate of silica is slow, allowing the formation of metal oxide to significantly compete with silica formation. This may result in rapid oxidation and even pesting, depending on the metal element(s) involved and the temperature. The presence of layer 201 may inhibit the formation of metal oxide in cases where, as described previously, the second silicide is selected for its ability to facilitate rapid silicon diffusion-more rapid than oxygen transport rate through silica, and more rapid than metal element diffusion through the silicide. This promotes preferential transport of silicon to the reaction area and mitigates the degree to which metal is available to participate in the oxidation reaction. The thickness of additional layer 201 need not be high; a continuous layer may be sufficient to achieve its described function. In some embodiments, the additional layer 201 has a thickness in the range from about 1 micrometer to about 10 micrometers, well within the capability of coating processes such as chemical vapor deposition (CVD), physical vapor deposition (PVD), and other suitable coating methods.

Another example of an optional layer present in article 100 addresses the issue of crystallization of the TGO (150, Fig.1), which can become a problem with prolonged exposure to temperatures above about 1200 degrees Celsius. Silica-based TGO typically forms in an amorphous form, but crystallized silica (cristobalite) goes through phase changes on cooling, and the crystallographic changes associated with the phase changes can induce cracking and spallation of the silica film, accelerating the oxidation of silicon compounds and degrading adhesion of outer coating layers to the underlying substrate. As described in commonly owned Patent Cooperative Treaty Patent Application PCT/US15/045593, filed 18 August 2015, providing a source of aluminum to the TGO may dope the TGO with aluminum, promoting an aluminosilicate composition in the TGO and stabilizing an amorphous structure that thus mitigates premature failures due to the described phase transformation.

Doping second layer 120 with aluminum may be one means of promoting aluminum uptake into the TGO, though this may not be efficient because the second silicide, present in second layer 120, is not substantially consumed by TGO formation. In one embodiment, as shown in Fig. 3, an intermediate layer 301 is disposed between second layer 120 and top layer 130. Intermediate layer 301 includes aluminum, and in service provides a source of aluminum that may be taken up within the TGO to stabilize its amorphous structure. In one embodiment, intermediate layer 301 includes an aluminosilicate glass. In another embodiment, layer 301 includes mullite, and in particular embodiments consists essentially of mullite. Mullite is thermodynamically stable with materials such as yttrium disilicate that may be included in top layer 130, and has been observed to promote aluminosilicate glass formation in TGO formation over silicon-based bond coats. Other aluminum-bearing materials such as yttrium-aluminum garnet (YAG) may be suitable as alternatives to mullite in intermediate layer 301, depending on specific materials selection for top layer 130 and other components of article 100. Plasma spray techniques are suitable for deposition of materials such as mullite and YAG and are used for such materials extensively in the art. Other coating techniques, such as slurry-based techniques or vapor deposition techniques, may be applied as well.

Combinations of the various functionalities described above for layers 201, 301 are also encompassed within the scope of this description. For instance, in some embodiments, layer 201 (Fig. 2), comprising silica, further includes one or more dopants that serve to inhibit crystallization within TGO 150 (Fig 1.). As noted previously, aluminum is one example of such a dopant. Other elements, such as boron, alkaline metals such as sodium and potassium, and alkaline earth metals such as calcium, magnesium, and strontium, for instance, may be included additionally with, or alternatively to, aluminum. In other embodiments, layer 301 includes dopants such as these described here in addition to the aluminum source included in this layer 301. Regardless of where the dopant is included, whether in layer 201 or layer 301 (or both of these, if both are present), the amounts of these dopants selected for use in layer 201 generally are selected with consideration given to a balance of properties. For instance, dopants may adversely affect properties such as melting point, rate of oxygen transport, and/or TGO viscosity, and so each dopant may have an upper limit of acceptable concentration to avoid having deleterious effects outweigh the advantageous effect on silica crystallization.

Top layer 130 may include various sub-layers. Use of the term "top layer" does not signify that layer 130 must be the outermost layer of article 100, although in some embodiments top layer is outermost. Top layer 130, typically including some form of oxide material, may be disposed to provide thermal insulation (a thermal barrier coating), environmental protection (an environmental barrier coating), or a combination of these functions. The selection of a suitable material will depend on the type of environment the article is to be exposed to, the composition of the underlying coatings and substrate, the cost of processing, and other factors. The top layer 130 may be a ceramic material including, but not limited to, a silicate (such as an aluminosilicate or rare earth silicate), and yttria-stabilized zirconia. Top layer 130 may include a rare earth monosilicate and/or rare earth disilicate. Top layer 130 may be a dual-layer coating, with an outer layer of rare earth monosilicate and an inner layer of rare earth disilicate. The rare earth elements associated with these monosilicate and disilicate materials include, for example, one or more of yttrium, ytterbium, lutetium, and scandium. In one embodiment, the outer layer of top layer 130 includes yttrium monosilicate and the inner layer of top layer 130 includes a rare earth disilicate (such as yttrium disilicate, for example).

Any of various techniques may be used for fabrication of top layer 130 and will be well known to practitioners in the art. Plasma spray, sol-gel, electrophoretic, and slurry-based deposition techniques are non-limiting examples of methods commonly used to apply coatings of this type.

### EXAMPLES

The following examples are presented to further illustrate non-limiting embodiments of the present invention.

One illustrative example of an embodiment of the present invention is an article 100 that includes a substrate 101 comprising a ceramic matrix composite, such as a CMC including silicon carbide. A first layer 110 is disposed over substrate 101, and this layer 110 includes a first silicide and a second phase. The first silicide is disposed to have an interconnected morphology, and the second phase includes silicon carbide. The volume fraction of silicide in the first layer 110 is in the range from about 10 percent to about 40 percent, such as about 20 percent, for instance. A second layer 120 is disposed over the first layer 110. The second layer 120 comprises a second silicide. This second silicide is disposed in mass transfer communication with the first silicide. A top layer 130, comprising an oxide such as a mono- or disilicate or yttria-stabilized zirconia, for example, is disposed over second layer 120.

Another illustrative example of an embodiment of the present invention is an article 100 that includes a substrate 101 comprising a ceramic matrix composite, such as a CMC including silicon carbide. A first layer 110 is disposed over substrate 101, and this layer 110 includes a first silicide and a second phase. The first silicide is disposed to have an interconnected morphology, and the second phase includes silicon nitride. The volume fraction of silicide in the first layer 110 is in the range from about 10 percent to about 50 percent, such as about 30 percent, for instance. A second layer 120 is disposed over the first layer 110. The second layer 120 comprises a second silicide. This second silicide is disposed in mass transfer communication with the first silicide. A top layer 130, comprising an oxide such as a mono- or disilicate or yttria-stabilized zirconia, for example, is disposed over second layer 120.

Another illustrative example of an embodiment of the present invention is an article 100 that includes a substrate 101 comprising a ceramic matrix composite, such as a CMC including silicon carbide. A first layer 110 is disposed over substrate 101, and this layer 110 includes a first silicide and a second phase. The first silicide is disposed to have an interconnected morphology, and the second phase includes a rare earth disilicate. The volume fraction of silicide in the first layer 110 is in the range from about 10 percent to about 40 percent, such as about 20 percent, for instance. A second layer 120 is disposed over the first layer 110. The second layer 120 comprises a second silicide. This second silicide is disposed in mass transfer communication with the first silicide. A top layer 130, comprising an oxide such as a mono- or disilicate or yttria-stabilized zirconia, for example, is disposed over second layer 120.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following clauses:
1. An article, comprising:
   a substrate comprising a ceramic matrix composite;
   a first layer disposed over the substrate, the first layer comprising an interconnected first silicide, and a second phase; and
   a second layer disposed over the first layer, the second layer comprising a second silicide in mass transfer communication with the first silicide.
2. The article of clause 1, wherein the second layer consists essentially of the second silicide.
3. The article of clause 1, wherein the first silicide and the second silicide are nominally identical materials.
4. The article of clause 1, wherein the second silicide comprises a lower silicide.
5. The article of clause 1, wherein the first silicide and the second silicide are compounds of the same metal element.
6. The article of clause 1, wherein the second silicide comprises a silicide of molybdenum, tantalum, tungsten, niobium, titanium, ruthenium, or a combination including one or more of the aforementioned elements.
7. The article of clause 1, wherein the second silicide comprises a disilicide, lower silicide, or a combination of these.
8. The article of clause 1, wherein the second silicide comprises a metal element, and wherein silicon has a faster diffusion rate through the silicide at a given temperature above about 1200 degrees Celsius than does the metal element.
9. The article of clause 1, wherein, for a given temperature above about 1200 degrees Celsius, silicon diffusion through the second silicide exceeds the rate at which oxygen diffuses through silica.
10. The article of clause 1, wherein the second layer has a thickness in a range from about 1 micrometer to about 25 micrometers.
11. The article of clause 1, wherein the second phase of the first layer has a coefficient of thermal expansion less than or equal to that of silicon carbide.
12. The article of clause 1, wherein the second phase comprises a ceramic material comprising carbon, nitrogen, oxygen, or a combination of these.
13. The article of clause 12, wherein the ceramic material comprises a carbide, a nitride, an oxide, or a combination of these.
14. The article of clause 1, wherein the second phase comprises silicon carbide.
15. The article of clause 1, wherein the second phase comprises silicon nitride.
16. The article of clause 1, wherein the second phase comprises a rare-earth disilicate.
17. The article of clause 1, wherein the second phase comprises SiAlON.
18. The article of clause 1, wherein the first layer has an effective coefficient of thermal expansion below about 6 parts per million per degree Celsius.
19. The article of clause 1, wherein a volume fraction of silicide in the first layer is in a range from about 10 percent to about 70 percent.
20. The article of clause 1, wherein a volume fraction of silicide in the first layer is in a range from about 20 percent to about 40 percent.
21. The article of clause 1, wherein the first silicide comprises a disilicide.
22. The article of clause 1, wherein the first silicide includes a disilicide and a lower silicide.
23. The article of clause 1, wherein the first silicide comprises a silicide of molybdenum, tantalum, tungsten, niobium, titanium, ruthenium, or a combination including one or more of the aforementioned elements.
24. The article of clause 1, further comprising a top layer disposed over the second layer, the top layer comprising an oxide.
25. The article of clause 24, wherein the oxide comprises a silicate, an aluminosilicate, yttria-stabilized zirconia, or a combination including any of the aforementioned.
26. The article of clause 24, further comprising an additional layer disposed between the second layer and the top layer, wherein the additional layer comprises silica.
27. The article of clause 26, wherein the additional layer further comprises a dopant.
28. The article of clause 27, wherein the dopant comprises aluminum, boron, an alkaline metal, an alkaline earth metal, or any combination including one or more of these.
29. The article of clause 24, further comprising an intermediate layer disposed between the second layer and the top layer, wherein the intermediate layer comprises aluminum.
30. The article of clause 24, further comprising an intermediate layer disposed between the second layer and the top layer, wherein the intermediate layer comprises aluminum, boron, an alkaline metal, an alkaline earth metal, or any combination including one or more of these.
31. The article of clause 29, wherein the intermediate layer comprises mullite.
32. The article of clause 1, wherein the article is a combustion liner for a gas turbine assembly, a transition piece for a gas turbine assembly, a shroud for a gas turbine assembly, a vane for a gas turbine assembly, or a blade for a gas turbine assembly.
33. An article comprising:
   a substrate comprising a ceramic matrix composite;
   a first layer disposed over the substrate, the first layer comprising an interconnected first silicide phase, and a second phase, the second phase comprising silicon carbide, wherein a volume fraction of silicide in the first layer is in the range from about 10 percent to about 40 percent;
   a second layer disposed over the first layer, the second layer comprising a second silicide in mass transfer communication with the first silicide; and
   a top layer disposed over the second layer, the top layer comprising an oxide.
34. An article comprising:
   a substrate comprising a ceramic matrix composite;
   a first layer disposed over the substrate, the first layer comprising an interconnected first silicide phase, and a second phase, the second phase comprising silicon nitride, wherein a volume fraction of silicide in the first layer is in the range from about 10 percent to about 50 percent; and
   a second layer disposed over the first layer, the second layer comprising a second silicide in mass transfer communication with the first silicide; and
   a top layer disposed over the second layer, the top layer comprising an oxide.
35. An article comprising:
   a substrate comprising a ceramic matrix composite;
      a first layer disposed over the substrate, the first layer comprising an interconnected first silicide phase, and a second phase, the second phase comprising a rare earth disilicate, wherein a volume fraction of silicide in the first layer is in the range from about 10 percent to about 40 percent;
   a second layer disposed over the first layer, the second layer comprising a second silicide in mass transfer communication with the first silicide; and
   a top layer disposed over the second layer, the top layer comprising an oxide.

## Claims

1. An article (100), comprising:
a substrate (101) comprising a ceramic matrix composite;
a first layer (110) disposed over the substrate (101), the first layer (110) comprising an interconnected first silicide, and a second phase; and
a second layer (120) disposed over the first layer (110), the second layer (120) comprising a second silicide in mass transfer communication with the first silicide.

2. The article (100) of claim 1, wherein the second layer (120) consists essentially of the second silicide.

3. The article (100) of claim 1 or 2, wherein the second silicide comprises a silicide of molybdenum, tantalum, tungsten, niobium, titanium, ruthenium, or a combination including one or more of the aforementioned elements.

4. The article (100) of any of claims 1 to 3, wherein the second silicide comprises a disilicide, lower silicide, or a combination of these.

5. The article (100) of claim 1, wherein the second silicide comprises a metal element, and wherein silicon has a faster diffusion rate through the silicide at a given temperature above about 1200 degrees Celsius than does the metal element.

6. The article (100) of claim 1, wherein, for a given temperature above about 1200 degrees Celsius, silicon diffusion through the second silicide exceeds the rate at which oxygen diffuses through silica.

7. The article (100) of claim 1, wherein the second phase of the first layer (110) has a coefficient of thermal expansion less than or equal to that of silicon carbide.

8. The article (100) of claim 1 or 7, wherein the second phase comprises one out of the group of
a ceramic material comprising carbon, nitrogen, oxygen, or a combination of these; silicon carbide; silicon nitride; a rare-earth disilicate; SiAlON.

9. The article (100) of claim 1, wherein the first layer (110) has an effective coefficient of thermal expansion below about 6 parts per million per degree Celsius.

10. The article (100) of claim 1, wherein the first silicide comprises one out of the group of a disilicide; a disilicide and a lower silicide; a silicide of molybdenum, tantalum, tungsten, niobium, titanium, ruthenium, or a combination including one or more of the aforementioned elements.

11. The article (100) of any of the preceding claims, further comprising a top layer (130) disposed over the second layer (120), the top layer (130) comprising an oxide.

12. The article (100) of claim 11, further comprising an additional layer (201) disposed between the second layer (120) and the top layer (130), wherein the additional layer (201) comprises silica and optional further comprises a dopant.

13. The article (100) of claim 11 or 12, further comprising an intermediate layer (301) disposed between the second layer (120) and the top layer (130), wherein the intermediate layer (301) comprises aluminum, boron, an alkaline metal, an alkaline earth metal, or any combination including one or more of these.

14. The article (100) of any of the preceding claims, wherein the article (100) is a combustion liner for a gas turbine assembly, a transition piece for a gas turbine assembly, a shroud for a gas turbine assembly, a vane for a gas turbine assembly, or a blade for a gas turbine assembly.

15. An article (100) comprising:
a substrate (101) comprising a ceramic matrix composite;
a first layer (110) disposed over the substrate (101), the first layer (110) comprising an interconnected first silicide phase, and a second phase, the second phase comprising silicon carbide, wherein a volume fraction of silicide in the first layer (110) is in the range from about 10 percent to about 40 percent;
a second layer (120) disposed over the first layer (110), the second layer (120) comprising a second silicide in mass transfer communication with the first silicide; and
a top layer (130) disposed over the second layer (120), the top layer (130) comprising an oxide.
